## Europäisches Patentamt

## European Patent Office

## Office européen des brevets

(11) Veröffentlichungsnummer: **0 328 560**
**B1**

(12) **EUROPÄISCHE PATENTSCHRIFT**

(45) Veröffentlichungstag der Patentschrift: **07.11.90**

(21) Anmeldenummer: **88902420.4**

(22) Anmeldetag: **25.03.88**

(86) Internationale Anmeldenummer:
**PCT/DE88/00190**

(87) Internationale Veröffentlichungsnummer:
**WO 88/07891 20.10.88 Gazette 88/23**

(51) Int. Cl.⁵: **B 01 J 20/12, F 24 F 6/04,
A 62 D 3/00, B 01 J 21/16**

(54) **MINERALISCHER STOFF, VERFAHREN ZU SEINER HERSTELLUNG UND VERWENDUNG DESSELBEN.**

(30) Priorität: **08.04.87 DE 3711870
28.08.87 DE 3728812**

(43) Veröffentlichungstag der Anmeldung:
**23.08.89 Patentblatt 89/34**

(45) Bekanntmachung des Hinweises auf die
Patenterteilung:
**07.11.90 Patentblatt 90/45**

(84) Benannte Vertragsstaaten:
**AT BE CH DE FR GB IT LI LU NL SE**

(56) Entgegenhaltungen:
**EP-A-0 197 012
EP-A-0 211 224
US-A-3 279 772
US-A-4 144 162
US-A-4 271 043
US-A-4 440 867**

(73) Patentinhaber: **MARX, Günther
D-5431 Ruppach-Goldhausen (DE)**

(72) Erfinder: **MARX, Günther
D-5431 Ruppach-Goldhausen (DE)**

(74) Vertreter: **Becker, Thomas, Dr., Dipl.-Ing. et al
Eisenhüttenstrasse 2
D-4030 Ratingen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen gebrannten bezietsungsweise ungebrannten mineralischen Stoff hoher offener Porosität auf der Basis mindestens eines Tones oder Tonminerals. Verfahren zu seiner Herstellung und vorteilhafte Verwendung.

Beispielsweise aus der DE—C 35 02 171 ist ein Mittel zur Melioration geschädigter oder mängelbehafteter Böden auf der Basis mindestens eines in ein Tonmineral eingelagerten mineralischen Düngers bekannt, welches eine Mischung verschiedener Tonminerale aus der Gruppe Kaoline, Montmorillonite, Serizite und/oder Illite aufweist. Mit einer derartigen Mischung verschiedener Naturstoffe, die nur eine geringe (natürliche) offene Porosität aufweisen, sollen geschädigte, insbesondere ausgelaugte Böden, aber auch Böden mit einem Gehalt an externen Schadstoffen verbessert oder regeneriert werden.

Weiterhin ist aus der DE—A 35 17 645 ein Mittel zur Melioration auch schadstoffhaltiger Böden und Massen bekannt, welches aus der Kombination mindestens eines mineralischen Düngers mit einem Stoff hohen Ionenaustausch- und/oder Quellvermögens besteht, beispielsweise einer oder mehrerer Tonmineralgruppen, etwa kaolinitische und/oder montmorillonitische oder serizitische und/oder illitische Tonminerale. Die bekannte Stoffkombination ist für den Einsatz im Deponiebereich geeignet, beispielsweise zur Entsorgung schadstoffhaltiger Halden und bei der Sanierung von Eluaten aus Deponien, Halden oder Kläranlagen und kann ebenso zur Klärschlammentsorgung eingesetzt werden. Die Schadstoffe werden adsorptiv gebunden und in wasserunlösliche Komplexe überführt; ebenso ist eine Anlagerung organischer Verbindungen möglich, wodurch etwa eine Geruchsbelästigung erheblich reduziert wird.

Die voranstehend genannten Stoffe sind im wesentlichen naturbelassen.

Weiterhin ist aus einem anderen Bereich, nämlich als Füllstoff für sogenannte Hydrokulturanlagen für Pflanzen, sogenannter Blähton bekannt, der einen relativ hohen Anteilgeschlossener Poren aufweist.

Produkte hoher Porosität mit einem hohen Anteil an geschlossenen Poren sind weiterhin als sogenannte Feuerfest-Leichtsteine zum Beispiel aus der DE—A 29 03 321 bekannt; der hohe Anteil geschlossener Poren dient in diesem Zusammenhang zur Wärmedämmung beziehungsweise um Ablagerungen von Brenngasrückstanden und Alkalien zu vermeiden. Dazu werden die Produkte bei Sintertemperatur und darüber gebrannt, nur so läßt sich ein geschlossenes Porenvolumen durch entsprechende Versinterung erzielen. Diese Aufbereitsungsbeziehungsweise Brennkriterien sind dem Fachmann seit langem bekannt und unter anderem in Sprechsaal 1977, Seiten 536 bis 544 wiedergegeben.

Aufgrund ständig steigender Anforderungen an die Entsorgung und Luftreinhaltung, nicht zuletzt aufgrund eines insbesondere in den letzten Jahren erheblich gewachsenen Umweltbewußtseins, wird ständig nach neuen Stoffen gesucht, die sich für derartige Zwecke einsetzen lassen. Derartige Einsatzzwecke werden wesentlich von Kostengesichtspunkten geprägt; so hat sich beispielsweise auf dem Gebiet der Kraftfahrzeugtechnik der Einsatz von Katalysatoren für Auspuffanlagen von Brennkraftmaschinen aus Kostengründen bislang nur in beschränktem Maßstab verwirklichen lassen.

Der Erfindung liegt daher die Aufgabe zugrunde, einen neuen Stoff zur Verfügung zu stellen, der bei der Schadstoffbekämpfung und/oder -entsorgung ebenso einsetzbar ist wie bei der Regulierung bestimmter physikalischer Ad- und Absorptionsvorgänge, wie der Feuchtigkeitsregulierung.

Der Erfindung liegt die Erkenntnis zugrunde, daß sich die vorteilhaften Eigenschaften mineralischer Stoffe, wie sie beispielsweise bei der Bodenmelioration genutzt werden, noch wesentlich verbessern lassen wodurch überhaupt erst ein Einsatz in großtechnischem Maßstab möglich wird, wenn die in diesem Zusammenhang wirksame Oberfläche der Naturstoffe erheblich vergrößert oder stabilisiert wird.

Die Aufgabe wird gemäß der vorliegenden Erfindung gelöst durch einen mineralischen Stoff mit den Merkmalen des Anspruchs 1, sein Herstellungsverfahren ist durch die Merkmale der Ansprüche 10 oder 14 beschrieben, vorteilhafte Verwendungen durch die Ansprüche 15 bis 18.

Während bei bekannten Blähtonen oder Feuerleichtsteinen bislang mit Porosierungsstoffen im wesentlichen geschlossene Poren erzeugt wurden und etwa an der Oberfläche von Formteilen entstehende offene Poren vielfach durch gesonderte Mittel verschlossen wurden (Versiegelung), wird bei dem erfindungsgemäßen Stoff das Augenmerk auf einen möglichst großen Anteil offener, also mit der Oberfläche in Verbindung stehender Poren Wert gelegt. Hierdurch läßt sich eine erhebliche Vergrößerung und Stabilisierung der wirksamen Oberfläche des erfindungsgemäßen Stoffes erzielen und auf diese Weise wird ein Einsatz des Stoffes bei der Schadstoffbekämpfung realisiert. Diese Ziel wird im besonderen durch einen Gehalt des Ton(mineral)gemisches aus einem Stoff aus der Gruppe der Smektite sowie eine entsprechende Aufbereitung beziehungsweise Herstellung des Endproduktes erreicht. Dabei läßt sich mit einem Stoff eine "in situ" Entsorgung durch Ab- oder Adsorption beziehungsweise katalytische Umsetzung der Schadstoffe erzielen.

Dabei hat die Erfindung erkannt, daß bei einem derartigen Ton(mineral)gemisch, das grubenfeucht beispielsweise schon einen Wassergehalt von 30 Gew.-% aufweist, der durch plastische Aufbereitung zum Beispiel auf über 50% gesteigert werden kann, bereits eine relativ große Oberfläche von über 60 $m^2/g$ erreicht werden kann, wenn der von physikalisch gebundenem Wasser eingenommene Porenraum durch einen Trocknungsvorgang als offene Porosität freigelegt wird. Der auf diese Weise zum Beispiel in Form eines Granulates oder als Pellets konfektionierte erfindungsgemäße mineralische Stoff kann dann unmittelbar zum Beispiel für Zwecke der Trockengasreinigung (auch Raumluft) oder dergleichen eingesetzt werden. Ebenso ist es aber auch möglich, das Ausgangsmaterial lediglich zu brechen oder zu mahlen, um es danach in feinteiliger Form zu Beispiel in ein zu entsorgendes Abwasser einzumischen oder in ein zu entsorgendes Rauchgas einzudüsen. Hier ergeben sich dann aus den angegebenen Werten für die offene Porosität entsprechende Werte für die freie Oberfläche.

Ebenso ist es aber möglich, das Ton(mineral-)gemisch zu Formkörpern zu formen (pressen) und danach zu trocknen. Fur einzelne Anwendungszwecke wird die dabei erzielte Grünstandsfestigkeit ausreichend sein.

Für zahlreiche, nachstehend noch im einzelnen genannte Anwendungsbereiche liegt der mineralische Stoff jedoch in einer Form vor, in der das Ausgangsmaterial gebrannt worden ist. Das gebrannte Material kann wiederum in zahlreichen Formen realisiert werden, beispielsweise als Granulat, als Brocken, oder aber geformt als Kuben, Zylinder, Schalen, oder mit wabenartiger Struktur und dergleichen, wobei diese Formkörper sich jeweils durch eine besonders hohe offene Porosität von vorzugsweise mehr als 50 Vol.% auszeichnen.

Der Brand erfolgt erfindungsgemäß unterhalb der Sintertemperatur und vorzugsweise bei einer bestimmten Temperaturstufe im Bereich zwischen 650°C und 1200°C, wobei die Stufen voneinander einen Abstand von etwa 100 bis 150°C aufweisen. Demzufolge liegen bevorzugte Brenntemperaturen bie 650/750/950/1050/1200°C. Durch eine Brenntemperatur unterhalb der Sintertemperatur wird die Bildung geschlossener Poren gezielt verhindert. Offenbar entstehen bei den verschiedenen Brennstufen jeweils andere Oxide mit katalytischen Eigenschaften und jeweils unterschiedlicher chemischer Reaktionsfähigkeit. Weiterhin entstehen mit steigender Brenntemperatur ein weiter freigelegtes $SiO_4$-Tetraedersystem, bei dem sich die Anzahl unabgesättigter Tetraeder mit setigender Brenntemperatur änder und/oder teilweise zersetzte und/oder umgewandelte Tonmineralkomplexe (Skelette) ("Metakaolin"), die eine sehr hohe Reaktionsfähigkeit aufweisen beziehungsweise new bilden. Hierdurch lassen sich anwendungsspezifische Eigenschaften einstellen. Sofern Brenntemperaturen oberhalb der Sintertemperatur gewählt werden, ist gegebenenfalls durch separate Maßnahmen die Aufrechterhaltung der offenen Porosität sicherzustellen, sofern diese möglich ist.

Zur Erhöhung der kapillaren Porosität sieht eine besonders vorteilhafte Ausgestaltung der Erfindung vor, daß das Ausgangsmaterial vor dem Brennen mit einem Porosierungsmittel vermischt wird. Hierbei erfolgt bei den genannten Brenntemperaturen, abhängig von der Art und dem Anteil das Porosierungsmittels zur Förderung der Bildung offener Poren vorzugsweise ein "langsamer", also schonender Brand, bei dem das Porosierungsmittel verhältnismäßig langsam verbrennt und die bei dieser Verbrennung entstehenden Gase zu einer allmählichen Ausformung verhältnismäßig kleiner, offener und statistisch verteilter Poren führen, wobei der Brennprozeß so geführt wird, daß vorwiegend offene Poren mit einem mittleren Porendurchmesser zwischen 5 und 500 µm entstehen, die eine optimale kapillare Saugkraft und eine günstige Größe für mikrobiologische Umsetzungen aufweisen, zum Beispiel bei einer Verwendung als Wasserverdunster beziehungsweise zur anaeroben oder aeroben Kärschlamm- oder Abwasserbehandlung wie nachstehend noch näher beschrieben wird.

Der Anteil an Porosierungsmittel zum Beispiel Sägemehl, Aluminium, Kork, Reisschalen oder dergleichen liegt vorzugsweise bei 5 bis 30 Gew.-% bezogen auf die Gesamtmischung, wobei die Bereichsgrenzen für das Porosierungsmittel im wesentlichen durch das unterschiedliche spezifische Gewicht verschiedener Porosierungsmittel bedingt sind und für das relativ schwere Sägemehl beispielsweise eher ein Anteil von 20 Gew.-% gilt, dagegen 5 Gew.-% für beispielsweise Reisschalen oder Schaumkunststoffe.

Gemäß eine besonders vorteilhaften Ausgestaltung der Erfindung ist dem Ausgangsmaterial Vulkangestein, Kalkstein, Mergel und/oder Dolomit beigemischt. Diese Zuschläge bewirken, einzeln oder in Kombination, offenbar eine besonders hohe Wirksamkeit zur Anlegerung beziehungsweise Bindung von Schad- und sonstigen Stoffen, beispielsweise Wasser, wozu nachstehend noch genauere Ausführungen folgen.

Gemäß einem wichtigen Merkmal der vorliegenden Erfindung enthält der erfindungsgemäße mineralische Stoff mindestens eine katalytisch wirksame Substanz. Diese katalytische Substanz kann, sofern sie nicht bereits im Rohstoff enthalten ist, und falls diese mit dem Brennprozeß zur Herstellung der offenen Poren verträglich ist, bereits in diesem Verfahrensstadium zugefügt werden, etwa durch Beimengung, in feiner Verteilung, zu dem Porosierungsmittel, was gleichzeitig noch die vorteilhafte Wirkung hat, daß die katalytische Substanz gezielt dort, wo jeweils Poren gebildet werden, zur Verfügung gestellt wird. In anderen Fällen kann die katalytisch wirksame Substanz aber auch durch nachfolgenden Niederschlag, beispielsweise in gasförmiger Form, oder als Lösung dem erfindungsgemäßen Stoff zugesetzt werden; der hohe Anteil offener Poren des erfindungsgemäßen Stoffes führt zu einer sehr großen und damit wirksamen katalytisch aktiven Oberfläche. Ebenso kann sie bereits Bestandteil aus Ausgangsmaterials auf Ton- oder Tonmineralbasis sein. Die katalytisch wirksame Substanz ist ein mineralische Naturprodukt wie Magnetit, Hämatit oder Goethit, mit Spurenelementen. Bei einer besonders vorteilhaften Ausgestaltung enthält der Stoff Smektitrohstoff mit 30 bis 55 Gew.-%. Dolomitsand mit 20 bis 30 Gew.-%, kaustisch gebrannten Dolomit mit 5 bis 15 Gew.-% Bariumkarbonat mit 10 bis 20 Gew.-% sowie Calciumsilikathydrat mit 5 bis 10 Gew.-%, wobei die Summe der Komponenten stets 100 Gew.-% ergeben soll. Mit einem derartigem Stoff läßt sich zum Beispiel eine Rauchgasentsorgung bewerkstelligen, bei der gleichzeitig, also mit einem einzigen Stoff, mehrere unterschiedliche Schadstoffe insbesondere $SO_2$ entsorgt und damit aus dem Rauchgas absorbiert werden können. Versuche haben gezeigt, daß auch $NO_x$-Verbindungen zu Stickstoff reduziert werden können.

Der erfindungsgemäße Stoff kann auch als getrocknetes oder gebranntes Granulat mit einer Korngröße von vorzugsweise 1 bis 8 mm zur Verfügung gestellt werden, wobei sich die Krongrößenbereiche zwischen 3 bis beziehungsweise 4 bis 8 mm als besonders vorteilhaft herausgestellt haben.

Die hohe Oberflächenaktivität des erfindungsgemäßen Stoffes läßt sich besonders auch vorteilhaft bei bestimmten Anwendungen nutzen, wenn aus dem erfindungsgemäßen Stoff Formkörper oder große Brocken hergestellt werden. Dies ist besonders im Hydrokulturbereich im Zusammenhang mit der Versorgung von Pflanzen vorteilhaft, da mit den erfindungsgemäßen Formkörpern den Pflanzen in optimaler Weise gleichzeitig Nährstoffe, Wasser, eine an den Bedarf der Pflanzen angepaßte Luftfeuchtigkeit und dergleichen zur Verfügung gestellt werden können und die schadstoffbindende Wirkung des erfindungsgemäßen Stoffs darüber hinaus ohne weitere Vorkehrungen zu einer Verbesserung des Raumklimas führt. Die große Oberfläche aus dem erfindungsgemäßen Stoff hergestellter Formkörper führt insbesondere zu einer optimalen Verdunstung von Wasser, und zur Anpassung an unterschiedliche Pflanzen oder Mengen von Pflanzen an die jeweils erforderliche Verdunsterleistung sind die Fomkörper vorzugsweise stapelbar ausgebildet. Hierzu weist der Formkörper in vorteilhafter Weise gemäß einer weiteren bevorzugten Ausgestaltung der Erfindung eine Scheiben-, Schalen- oder Plattenform auf und ist an seiner Oberseite mit einer Vertiefung und an seiner Unterseite mit einem korrespondierenden Vorsprung versehen. Die Vertiefung auf der Oberseite des Formkörpers kann dann den an der Unterseite vorgesehenen Vorsprung eines weiteren Formkörpers aufnehmen, wodurch sich mehrere Formkörper besonders leicht stapeln lassen. Durch eine entsprechende vorstehende Randausbildung ist das gleiche Ziel erreichbar. Damit bei hoheren Stapeln mehrere Formkörper auf einfache Weise sicher aneinander festgelegt werden können, ist vorgesehen daß der Formkörper vorzugsweise zentral eine von der Ober- zur Unterseite durchragende Öffnung aufweist. Durch die Öffnungen mehrerer übereinander gestapelter Formkörper kann dann ein Stab gesteckt werden um so die Formkörper sicher gegen seitliche Verschiebung zu schützen und gegeneinander festzulegen, wobei weitere Sicherungselemente, wie Schrauben und Scheiben vorgesehen werden können.

Die Luftkonvektion findet im wesentlichen in vertikaler Richtung statt. Damit bei Stapeln aus mehreren gebrannten Formkörpern die wirksame Oberfläche noch weiter vergrößert wird, weisen die Formkörper vorzugsweise zumindest eine den Formkörper von der Ober- zur Unterseite durchragende Öffnung auf, durch die ebenfalls Luft streichen kann. Eine weitere Oberflächenvergrößerung der Formkörper läßt sich durch Anordnung über den Außenumfang des Formkörpers vorgesehener randseitiger Ausnehmungen bewerkstelligen. Die so zum Beispiel in ein Wasserdepot gestellten porösen Formkörper nehmen dann aufgrund der Kapillarwirkung der Poren Wasser auf und geben dieses anschließend an die Umgebungsluft und/oder einen benachbarten Formkörper und- soweiter ab. Durch unterschiedliche Zahl und/oder Oberfläche der Formkörper läßt sich so die wirksame Oberfläche raumspezifisch leicht einstellen. Diese "Verdunster" arbeitet völlig ohne externe Energie.

Der Wirkungsmechanismus des erfindungsgemäßen Stoffes ist zum jetzigen Zeitpunkt wissenschaflich noch nicht genau erforscht. Es kann angenommen werden, daß zum Beispiel beim Einsatz als Absorptionsmittel zur Rauchgasreinigung durch die Smektitkomponente und gegebenenfalls darin enthaltenen Magnetit sowie Spurenelemente ein katalytische Aufoxidation von Schwefel- und Stickstoffverbindungen des Rauchgasses erfolgt und im Rauchgas enthaltene toxische Schwermetallionen wasserunlöslich angelagert werden. Darüber hinaus entfeuchtet der Smektitrohstoff offenbar das Rauchgas und verhindert Geruchsemmission. Der Dolomitsand wandelt anscheinend die im Rauchgas enthaltene Flußsäure in wasserunlösliches $CaF_2$ um und führt zu einer Reaktion eines Teiles der Schwefelverbindungen zu Calciumsulfatverbindungen. Die Hauptmenge der Schwefelverbindungen wird anscheinend durch den kaustisch gebrannten Dolomit ebenfalls in Calciumsulfatverbindungen umgewandelt. Die schnelle Reaktion des Rauchgases mit Bariumkarbonat verhindert offenbar die unerwünschte Bildung von $Ca(OH)_2$ oder vermindert diese jedenfalls und führt zur Entstehung wasserunlöslichen Bariumsulfats ($BaSO_4$). Der vorteilhafte Einfluß des Calciumsilikathydrats zeigt sich insbesondere in einer erheblichen Verringerung der Geruchsemission, möglicherweise durch ähnliche Gründe hervorgerufen wie bei Smektit. Wesentlich scheint insoweit auch der Einfluß amorpher Kieselsäure beziehungsweise amorphen Aluminiumoxids zu sein, wie sie im Smektit bereits vorliegen oder getrennt zugegeben werden können.

Neben den genannten Verwendungszwecken kann der erfindungsgemäße Stoff sowohl in ungebrannter wie gebranter Form zur Geruchsverminderung und/oder Reaktionsbeschleunigung, zum Beispiel bei der Kompostierung und Klärschlammaufbereitung eingesetzt werden. Er speichert Sickerwässer und verhindert die Nährstoffauswaschung und Denitrifikation in Böden und bei Komposten. Die kapillare Saugkraft der offenen Poren ist dabei wichtig, damit mikrobiologische Umsetzungen, zum Beispiel bei aerober und anaerober Klärschlamm- oder Abwasseraufbereitung schneller ablaufen können und den dabei erforderlichen Gasaustritt gewährleisten. Die genannte Dotierung des erfindungsgemäßen Stoffes durch katalytisch wirksame Substanzen kann hier eine weitere Optimierung schaffen.

Nahen den katalytischen Eigenschaften des erfindungsgemäßen Stoffes stehen aber auch dessen absorptive und adsorptive Eigenschaften im Vordergrund, die zum Beispiel bei chemischen Reaktionen beziehungsweise der Absorption bei der Reinigung von mit Schadstoffen kontaminiertem Trinkwasser, Abwasser, Sicherwässern, Eluaten, aber auch Rauchgasen und kontaminierten Dämpfen besonders günstig ausgenutzt werden können. Auch hier führen die genannten Bestandteile beziehungsweise Zusätze wie Smektit, Magnetit beziehungsweise Spurenelemente, Schwermetalle etc. und die dabei in der jeweiligen Brennstufe gebildeten Oxide zu weiter optimierten Absorptions- oder Adsorptionswerten beziehungsweise einer Erhöhung der katalytischen Wirkung des Stoffes. Damit wird ein Stoff geschaffen, der auch bei Abwässern, Klärschlämmen et cetera, die in ihrer Zusammensetzung stark schwanken, eine sichere Entsorgung gewährleistet.

Der erfindungsgemäße mineralische Stoff kann auch zur Verfestigung von Klärschlämmen auf Deponien Verwendung finden, wobei dann vorzugsweise ein hoher Anteil an amorphen $SiO_2$ und $Al_2O_3$ sicherzustellen ist, wobei sich dann zusammen mit Calciumoxid oder Calciumhydroxid eine Calciumsilikat- und Calciumaluminatverfestigung ergibt. Neben der hydraulischen Verfestigung wirkt die Dispergierung des Tons abdichtend, wodurch gleichzeitig ein Schutz gegen eventuell auftretende saure Eluate aus einem Deponiekörper erreicht wird und es werden aus kontaminierten Sicherwässern toxische Derivate wasserunlöslich angelagert und die Geruchsemmision vermindert.

Nachstehend wird die Erfindung anhand eines als Formteil gestalteten Verdunsters beispielhaft näher erläutert, woraus sich weitere Vorteile und Merkmale ergeben.

In der Zeichnung zeigen:

Figur 1: Eine erste Ausführungsform eines erfindungsgemäßen Formkörpers;

Figur 2: Eine Anordnung aus fünf übereinander gestapelten erfindungsgemäßen Formkörpern; und

Figure 3: Eine weitere Ausführungsform eines erfindungsgemäßen Formkörpers mit randseitigen Ausnehmungen.

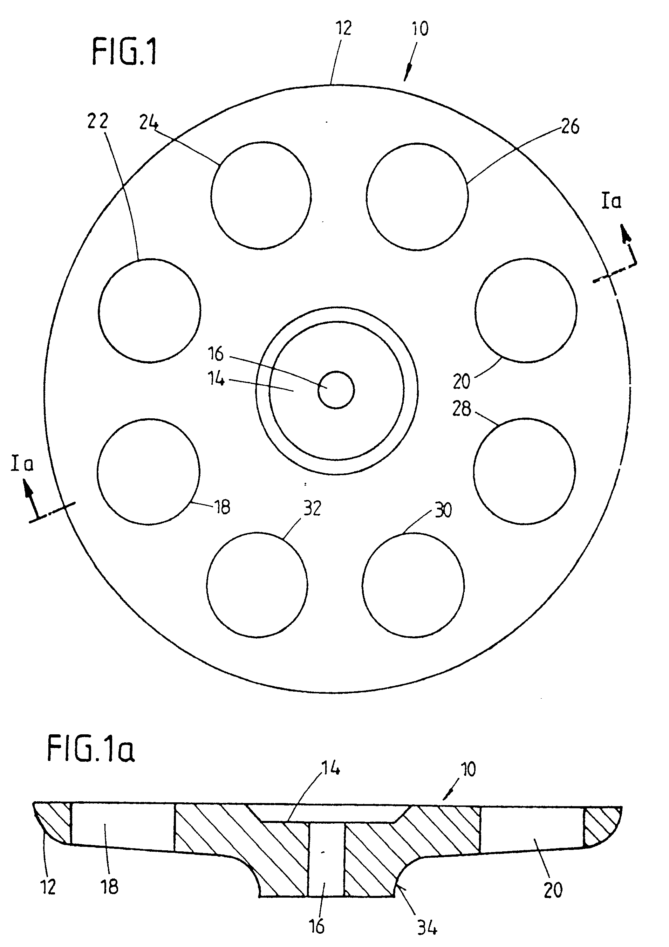

In der oberen Hälfte der Figur 1 ist ein scheibenförmiger Formkörper 10 in einer Aufsicht und in der unteren Hälfte der Figur 1 in einem Querschnitt entlang eine Ebene 1a—1a der oberen Hälfte von Figur 1 dargestellt. Der Formkörper 10 besteht im wesentlichen aus einer Platte 12, an deren Unterseite ein Vorsprung 34 und an deren Oberseite eine korrespondierende Ausnehmung 14 vorgesehen ist. Eine zentrale, von der Oberseite zur Unterseite durchreichende Öffnung 16 kann einen Stab aufnehmen, wenn mehrere Formkörper übereinander gestapelt werden sollen, um diese an einer Verschiebung in radialer Richtung zu hindern. Der Außendurchmesser des Vorsprungs 34 an der Unterseite der Platte 12 ist geringfügig geringer als der Innendurchmesser der Ausnehmung 14 an der Oberseite der Platte 12.

Weiterhin ist die Platte 12 mit symmetrisch auf einem Kreis um den Mittelpunkt angeordneten acht Öffnungen 18, 20, 22, 24, 26, 28, 30 und 32 versehen, die jeweils von der Oberseite der Platte 12 bis zu deren Unterseite durchragen. Diese Öffnungen dienen zu einer Erleichterung der vertikalen Luftkonvektion, insbesondere wenn mehrere Formkörper 10 übereinander gestapelt werden.

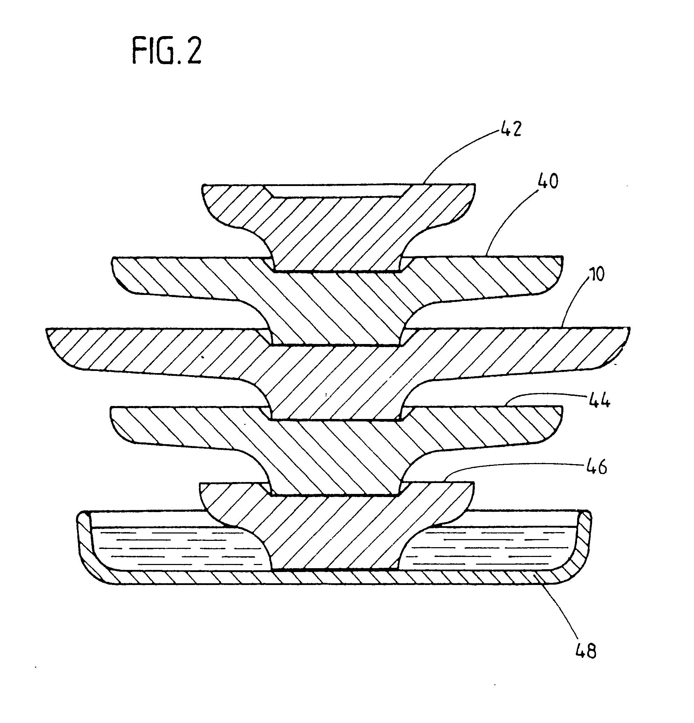

In Figur 2 sind in einem seitlichen Vertikalschnitt fünf erfindungsgemäße Formkörper 46, 44, 10, 40 und 42 dargestellt, die jeweils mit Abstand zueinander aufeinander gestapelt sind. Die Formkörper 46, 44, 10, 40 und 42 sind scheibenförmig und weisen einen jeweils unterschiedlichen Außendurchmesser auf, jedoch sind die jeweiligen Vertiefungen an den Oberseiten der Formkörper beziehungsweise die korrespondierenden Vorsprünge an den Unterseiten der Formkörper jeweils gleich ausgeführt. Der Formkörper 46 taucht in eine Schale 48 ein, die mit Wasser gefüllt ist. Aufgrund der hohen Porosität der Formkörper und insbesondere des hohen Anteils offener Poren wird durch die Kapillarwirkung der Poren das Wasser aus der Schale 48 zunächst in den Formkörper 46 gesaugt und weiterhin nacheinander in die darüberliegenden Formkörper 44, 10, 40 und 42 transportiert. Nach einer gewissen Zeit sind sämtliche Formkörper 46 bis 42 durchgeuchtet und geben als Verdunster Wasser an die Umgebung ab. Dies alles erfolgt ohne jede Stromzufuhr oder Wärmezufuhr, wie zum Beipiel bei elektrischen Verundstern oder Heizungsverdunstern nach dem Stand der Technik. Durch die insgesamt bereitgestellte äußerst große Oberfläche der Formkörper (hier; 46, 44, 10, 40 und 42) wird eine hohe Verdunsterleistung zur Verfügung gestellt, die durch Aufstapeln weiterer Formkörper noch vergrößert werden kann, zum Beispiel zur Adaptierung an die jeweiligen Raumverhältnisse. Ebenso ist es möglich, etwa bei geänderter Umgebungstemperatur, die Verdampferleistung der gasamten Anordnung dadurch zu reduzieren, daß einer oder mehrere der Formkörper vom Stapel abgenommen wird (werden). Dem in der Schale 48 befindlichen Wasser können zusätzlich noch Nährstoffe für Pflanzen, die im Wasser oder an oder auf den Formkörpern angeordnet sind, zugegeben werden und diese Nährstoffe werden dann bei geeigneter Porengröße der Formkörper ebenfalls mit dem Wasser transportiert.

Für Pflanzen-Hydrokulturen lassen sich darüber hinaus in vorteilhafter Weise die genannten gebrannten Formkörper mit zusätzlichem Granulat aus dem erfindungsgemäßen Stoff kombinieren. Die Pflanzen bilden dann ihr Wurzelwerk im Granulat aus und die Formkörper stellen eine optimal angepaßte Luftfeuchtigkeit zur Verfügung. Ebenso kann auch reines Granulat (Pellets) zum Beispiel in ein Pflanzengefäß zusammen mit Wasser gegeben werden. Durch die offene Porosität saugt sich das Granulat mit Wasser beziehungsweise der Nährstofflösung voll und schwimmt nicht—im Gegensatz zu Blähton-Produkten—auf. Vielmehr findet eine selbsttätige Wasserregulierung, je nach Bedarf der Pflanze, statt.

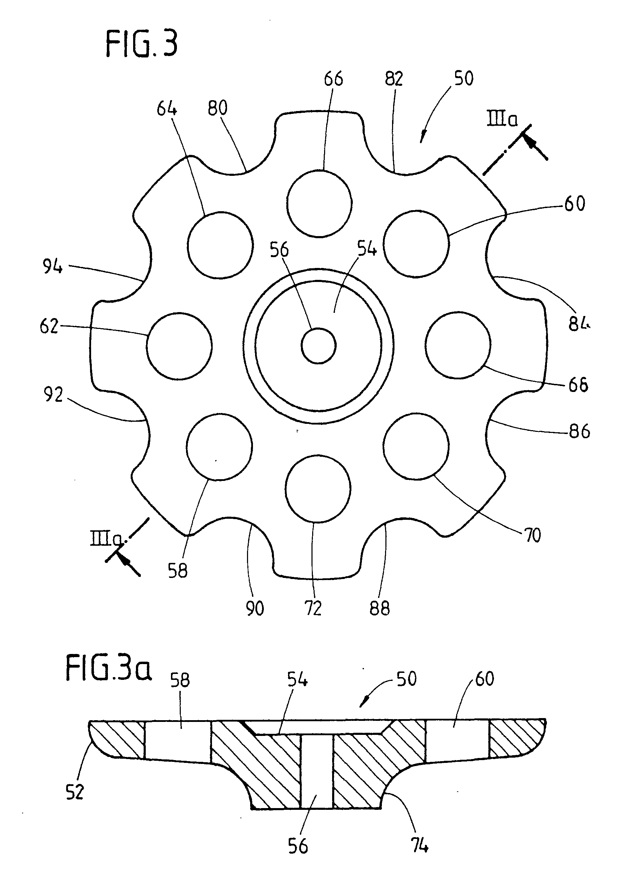

In Figure 3 ist ein weiterer erfindungsgemäßer Formkörper 50 dargestellt, und zwar an der oberen Hälfte der Figur 3 in einer Aufsicht und in der unteren Figurenhälfte in einem vertikalen Schnitt entlang der Ebene IIIa—IIIa.

Der Formkörper 50 umfaßt im wesentlichen einen scheibenförmigen Körper 52, auf dessen Oberseite eine Vertiefung 54 und an dessen Unterseite, wie bereits im Zusammenhang mit Figure 1 beschrieben, ein korrespondierender Vorsprung 74 ausgebildet ist. Ein zentrisches Loch 56 dient zum Einführen eines Stabs zur Fixierung des Formkörpers 50 gegen seitliche, also radiale Verschiebung.

Weiterhin wird die Scheibe 52 von acht symmetrisch auf einem Kreis um den Mittelpunkt der Scheibe 52 liegenden Öffnungen 58, 62, 64, 66, 60, 68, 70 und 72 durchragt, die die wirksame Oberfläche des Formkörpers 50 weiter vergrößern und insbesondere eine Luftzirkulation in vertikaler Richtung bei mehreren übereinander gestapelten Formkörpern erleichtern.

Zu einer weiteren Vergrößerung der wirksamen Oberfläche dienen randseitig vorgesehene halbkreisförmige Ausnehmungen 80, 82, 84, 86, 88, 90, 92 und 94.

Sowohl die Granulatform als auch der Formkörper eignen sich auch zur Reinigung, Nährstoffzugabe, pH-Wert-Regulierung, Schadstoffbindung etc. von sonstigen Fluiden, Suspensionen oder dergleichen, zum Beispiel von Wasser in Aquarien oder zur Klärschlammbehandlung. Hier kann das Material auch als Mehr eingesetzt werden. Die Formkörper können einenan den jeweiligen Anwendungszweck angepaßten Aufbau enthalten, beispielsweise eine wabenförmige Struktur bei Verwendung als Rauchgaskatalysator oder der gleichen. Sie unterscheiden sich von Katalysatoren gemäß dem Stand der Technik dadurch, daß die eigentlich katalytisch wirksamen Substanzen nicht auf das fertige Produkt aufgedampft oder sonstwie getrennt aufgebracht werden brauchen.

Weitere Anwendungsbereiche sind zum Beispiel die thermische Entsorgung toxischer Substanzen, insbesondere von Dioxinen, die bisher mangels eines geeigneten Substrates für die Beschleunigung der Umsetzung problematisch ist. Ein gebrannter erfindungsgemäßer Stoff, der bei einer Reaktionstemperatur oberhalb 350°C dem zu entsorgenden Material zugegeben wird beziehungsweise von dem zu entsorgenden Material durchströmt wird, führt zu einer katalytischen Beschleunigung der Umsetzung der Dioxine in unschädliche Komponenten. Für andere Stoffe gelten unter Umständen andere Reaktionstemperaturen.

Der in der Beschreibung erwähnte Einsatzbereich zur Verfestigung von Deponien führt aufgrund stets vorhandener restlicher Tonbestandteile gleichzeitig auch zu einer Abdichtung durch eine Dispergierung der Tonminerale. Insoweit wird mit einem Substrat sowohl eine Verfestigung wie Abdichtung eines Deponiekörpers erreicht.

Bei der Trocknung beispielsweise von Klärschlämmen mit einem erfindungsgemäßen, zu Beispiel pulverförmigen Material werden Schadstoffe aus dem Klärschlamm wasserunloslich eingebunden und das Material kann anschließend als Dünger verwendet werden.

## Patentansprüche

1. Mineralischer Stoff auf der Basis eines Tonminerals aus der Gruppe der Smektite, mit einem Gehalt an Hämatit, Goethit oder Magnetit sowie mindestens einem Spurenelement wie Kupfer, Nickel, Mangan, Titan, Zink oder Chrom und einen offenen Porosität von mindestens 20 Vol.-%.

2. Mineralischer Stoff nach Anspruch 1, konfektioniert als Formkörper.

3. Mineralischer Stoff nach Anspruch 1, konfektioniert in Granulatform, wobei die Granalien einen mittleren Durchmesser von vorzugsweise zwischen 1 und 8 mm aufweisen.

4. Mineralischer Stoff nach einem der Ansprüche 1 oder 2 mit der Maßgabe, daß der Stoff unterhalb der Sintertemperatur zwischen 650 und 1200°C gebrannt wurde und der mittlere Durchmesser der Poren 5 bis 500 µm beträgt.

5. Mineralischer Stoff nach Anspruch 4, wobei der gebrannte Formkörper (10, 40, 42, 44, 46, 50) stapelbar und scheiben-, schalen- oder plattenförmig ausgebildet und mit vorzugsweise mindestens einer Öffnung (16, 18, 56, 58) oder randseitiger Ausnehmung (80, 82, 84, 86, 88, 90, 92, 94) ausgebildet ist.

6. Mineralischer Stoff nach Anspruch 4, wobei der gebrannte Formkörper zylinder-, waben- oder gitterförmig ausgebildet ist.

7. Mineralischer Stoff nach einem der Ansprüche 1 bis 6, wobei das Ton(mineral)gemisch einen Anteil an Vulkangestein, mergeligem Kalkstein, Kalkmergel, Tonmergel, mergeligem Ton und/oder Dolomit aufweist oder dieser Anteil zugemischt worden ist.

8. Mineralischer Stoff nach einem der Ansprüche 1 bis 7, wobei das Ton(mineral)gemisch einen Gehalt an amorpher Kieselsäure und/oder amorphem Aluminiumoxid aufweist.

9. Mineralischer Stoff nach einem der Ansprüche 1 bis 8, mit einer offenen Porosität von 50 bis 80 Vol.-%.

10. Verfahren zur Herstellung eines mineralischen Stoffes hoher offener Porosität nach einem der Ansprüche 1, 2 oder 4 bis 9, wobei die Mischungskomponenten gegebenenfalls gleichzeitig mit oder nach einem Brechen und/oder Mahlen, plastischer Aufbereitung, gegebenenfalls Granulieren oder Pelletisieren und Herstellung von Formkörpern getrocknet und anschließend die Formkörper unterhalb der Sintertemperatur des Stoffes zwischen 650 und 1200°C gebrannt werden.

11. Verfahren nach Anspruch 10, wobei das Brennen bei etwa 650°C, 750°C, 950°C, 1050°C oder 1200°C durchgeführt wird.

12. Verfahren nach einem der Ansprüche 10 oder 11, wobei das Ton(mineral)gemisch vor dem Brennen mit einem Porosierungsmittel, vorzugsweise Sägemehl, Papier(schlamm), Reisschalen, Schaumkunststoff, Korkmehl und/oder neidrig kalziniertem Ton vermischt wird.

13. Verfahren nach Anspruch 12, wobei der Anteil des Porosierungsmittels 5 bis 30 Gew.-%, bezogen auf die Gesamtmischung, beträgt.

14. Verfahren zur Herstellung eines mineralischen Stoffes hoher offener Porosität nach einem der Ansprüche 1, 3 oder 7 bis 9, wobei die Mischungskomponenten, gegebenenfalls gleichzeitig mit oder nach einem Brechen und/oder Mahlen, sowie einer plastischen Aufbereitung zu Granalien mit einem mittleren Durchmesser von 1 und 8 mm hergestellt werden.

15. Verwendung eines mineralischen Stoffes nach einem der Ansprüche 1 bis 9 zur Bindung und/oder Umwandlung von Schadstoffen aus Gase insbesondere Rauchgasen aus Verbrennungsanlagen oder Flüssigkeiten, insbesondere Trinkwasser, Abwasser und Klärschlamm.

16. Verwendung eines mineralischen Stoffes nach einem der Ansprüche 1 bis 9, zur Trocknung von Klärschlämmen zum anschließenden Düngereinsatz und/oder der gleichzeitigen Verfestigung und Abdichtung von Klärschlämmen in Deponien.

17. Verwendung eines mineralischen, gebrannten Stoffes nach einem der Ansprüche 1, 2 oder 4 bis 9 zur thermischen Entsorgung toxischer Substanzen wie Dioxinen bei Temperaturen größer 200°C.

18. Verwendung eines mineralischen gebrannten Stoffes nach einem der Ansprüche 1, 2 oder 4 bis 9 zur Aufnahme von Wasser aus einem Depot und anschließender Abgabe an die Umgebungsluft.

## Revendications

1. Substance minérale sur la base d'un minéral argileux du groupe des bentonites, à teneur en hématite, goethite ou magnétite, et avec au moins un oligo-élément tel que du cuivre, du nickel, du manganèse, du titane, du zinc ou du chrome, et une porosité ouverte d'au moins 20% (en volume).

2. Substance minérale selon la revendication 1, réalisée sous forme de corps façonné.

3. Substance minérale selon la revendication 1, réalisée sous forme de granulat, les granulés présentant un diamètre moyen compris, de préférence, entre 1 et 8 mm.

4. Substance minérale selon la revendication 1 ou 2, avec la caractéristique que la substance a été calcinée à une température comprise entre 650 et 1200°C inférieure à la température de frittage, et que le diamètre moyen des pores est compris entre 5 et 500 μm.

5. Substance minérale selon la revendication 4, le corps façonné calciné (10, 40, 42, 44, 46, 50) étant réalisé superposable et en forme de disque, de cuvette ou de plaque, et étant réalisé avec, de préférence, au moins une ouverture (16, 18, 56, 58) ou un évidement marginal (80, 82, 84, 86, 88, 90, 92, 94).

6. Substance minérale selon la revendication 4, le corps façonné calciné étant réalisé cylindrique, alvéolé ou treillissé.

7. Substance minérale selon l'une des revendications 1 à 6, le mélange (de minéral) argileux présentant une part de roche volcanique, roche calcaire marneuse, marne calcaire, marne argileuse, argile marneuse et/ou dolomite, ou cette part ayant été ajoutée au mélange.

8. Substance minérale selon l'une des revendications 1 à 7, le mélange (de minéral) argileux présentant une part d'acide silicique amorphe et/ou d'alumine amorphe.

9. Substance minérale selon l'une des revendications 1 à 8, avec une porosité ouverte de 50 à 80% (en volume).

10. Procédé de production d'une substance minérale de porosité ouverte élevée selon l'une des revendications 1, 2 ou 4 à 9, selon lequel les composants du mélange sont séchés éventuellement simultanément avec ou après un concassage et/ou un broyage, un traitement plastique, éventuellement une granulation ou une agglomération en boulettes, et une fabrication de corps façonnés, à la suite de quoi les corps façonnés sont calcinés à une température comprise entre 650 et 1200°C, inférieure à la température de frittage de la substance.

11. Procédé selon la revendication 10, selon lequel la calcination est réalisée à environ 650°C, 750°C, 950°C, 1050°C ou 1200°C.

12. Procédé selon la revendication 10 ou 11, selon lequel le mélange (de minéral) argileux est, avant la calcination, mélangé à un agent de formation de pores, de préférence sciure de bois, papier (boue de papier), écorces de riz, plastique cellulaire, mouture de liège et/ou argile calciné à basse température.

13. Procédé selon la revendication 12, selon lequel la proportion d'agent de formation de pores et de 5 à 30% (en poids), par rapport à l'ensemble du mélange.

14. Procédé de production d'une substance minérale de porosité ouverte élevée selon l'une des revendications 1, 3 ou 7 à 9, selon lequel les composants du mélange sont, éventuellement simultanément avec ou après un concassage et/ou un broyage, ainsi qu'un traitement plastique, fabriqués sous forme de granulés d'un diamètre moyen compris entre 1 et 8 mm.

15. Utilisation d'une substance minérale selon l'une des revendications 1 à 9 pour lier et/ou transformer des polluants dans des gaz, notamment des fumées d'installations de combustion, ou dans des liquides, notamment de l'eau potable, des eaux usées et des boues de curage.

16. Utilisation d'une substance minérale selon l'une des revendications 1 à 9 pour sécher des boues de curage en vue d'une utilisation ultérieure comme engrais, et/ou pour simultanément stabiliser et rendre étanche des boues de curage dans des décharges.

17. Utilisation d'une substance minérale et calcinée selon l'une des revendications 1, 2 ou 4 à 9 pour l'élimination thermique de matières toxiques tels que des dioxines à des températures supérieures à 200°C.

18. Utilisation d'une substance minérale selon l'une des revendications 1, 2 ou 4 à 9 pour absorber de l'eau provenant d'une décharge, puis la remettre dans l'air ambiant.

**Claims**

1. Mineral substance based on a clay mineral of the smectite group, containing haematite, goethite or magnetite together with at least one trace element such as copper, nickel, manganese, titanium, zinc or chromium and having an open porosity of at least 20% by volume.

2. Mineral substance according to claim 1 in the form of a moulding.

3. Mineral substance according to claim 1, in granulated form, the granules having an average diameter of preferably between 1 and 8 mm.

4. Mineral substance according to one of claims 1 and 2, with the proviso that the substance has been calcined below the sintering temperature at between 650 and 1200°C and the average diameter of the pores is 5 to 500 µm.

5. Mineral substance according to claim 4, wherein the calcined moulding (10, 40, 42, 44, 45, 50) is arranged to be stackable and is in the form of a disc, dish or sheet and is constructed with preferably at least one opening (16, 18, 56, 58) or recess (80, 82, 84, 86, 88, 90, 92, 94) on its edge.

6. Mineral substance according to claim 4, wherein the calcined moulding is cylindrical, honeycomb-shaped or lattice-shaped.

7. Mineral substance according to one of claims 1 to 6, wherein the clay (mineral) mixture contains an amount of volcanic rock, marly limestone, limestone marl, clay marl, marly clay and/or dolomite or an amount thereof has been added to the mixture.

8. Mineral substance according to one of claims 1 to 7, wherein the clay (mineral) mixture contains an amount or amorphous silicic acid and/or amorphous aluminium oxide.

9. Mineral substance according to one of claims 1 to 8, having an open porosity of 50 to 80% by volume.

10. Process for producing a mineral substance having a high open porosity according to one of claims 1, 2 or 4 to 9, wherein the components of the mixture are dried optionally at the same time as or after being broken up and/or milled, subjected to plastic processing, optionally granulated or pelletised and formed into mouldings, and the mouldings are subsequently calcined below the sintering temperature of the substance at between 650 and 1200°C.

11. Process according to claim 10, wherein the calcining is carried out at about 650°C, 750°C, 950°C, 1050°C or 1200°C.

12. Process according to one of claims 10 and 11, wherein the clay (mineral) mixture is mixed, before calcining, with a pore-forming agent, preferably sawdust, paper (sludge), ricehusts, foam plastics, powdered cork and/or lightly calcined clay.

13. Process according to claim 12, wherein the proportion of pore forming agent is from 5 to 30% by weight, based on the total mixture.

14. Process for producing a mineral substance having a high open porosity according to one of claims 1, 3, or 7 to 9, wherein the components of the mixture are formed into granules with an average diameter from 1 to 8 mm optionally at the same time as or after being broken up and/or subjected to plastic processing.

15. Use of a mineral substance according to one of claims 1 to 9 for binding and/or converting harmful substances from gases, particularly flue gases from combustion plants, or liquids, especially drinking water, waste water and sewage sludge.

16. Use of a mineral substance according to one of claims 1 to 9 for drying sewage sludges for subsequent use as fertilizers and/or for simultaneously solidifying and sealing sewage sludges in dumps.

17. Use of a mineral calcined material according to one of claims 1, 2 or 4 to 9 for thermally removing toxic substances such as dioxins at temperatures exceeding 200°C.

18. Use of a mineral calcined material according to one of claims 1, 2 or 4 to 9 for absorbing water from a dump and subsequently releasing it into the ambient air.

FIG.1

12 10

22 24 26

16
14 20

28

Ia

Ia 18 32 30

FIG.1a

14 10

12 18 16 34 20

FIG.2

## FIG.3

## FIG.3a